# EUROPEAN PATENT SPECIFICATION

(11) **EP 2 710 709 B1**
(45) Date of publication and mention of the grant of the patent: **19.08.2015**
(21) Application number: 12727321.7
(22) Date of filing: 15.05.2012
(51) Int. Cl.: H02K 5/12

(54) **SUBMERGED MOTOR**
UNTERWASSERMOTOR
MOTEUR SUBMERGÉ

(30) Priority: 16.05.2011 IT BO20110275
(43) Date of publication of application: 26.03.2014
(73) Proprietor: Pedrollo S.p.a., 37047 San Bonifacio (Verona) (IT)
(72) Inventor: PEDROLLO, Silvano, 37047 San Bonifacio (VR) (IT)
(74) Representative: Manzella & Associati
(86) International application number: PCT/EP2012/059000
(87) International publication number: WO 2012/156396

(56) References cited:
- US-A- 4 015 633
- US-A- 4 281 973

## Description

### Technical Field

The present invention regards a submerged motor, particularly adapted to be used in connection with submerged pumps.

### Background Art

It has been known that, in order to empty wells or other types of similar reservoirs, suitable submerged electric pumps have been used, for both civil and industrial use. Known submerged electric pumps generally have a discharge body inside which is housed an impeller member in communication with the external environment; the body of the pump is axially coupled to an electric motor suitable to drive in rotation the impeller member.

Therefore, submerged motors which are suitable to be immersed in wells and the like and can be coupled to the connection member of a pump, for example centrifugal and peripheral submerged pumps, have been realized. Known submerged motors generally have a cylindrically shaped tubular case, inside which is inserted coaxial an electric motor unit. Suitable closure means are adapted to isolate the room for housing the motor unit inside the case from the fluid present outside the same case. The motor shaft, driven by the aforesaid electric motor, is supported in rotation by suitable rolling means, for example conventional ball bearings. In particular the lower bearing, arranged underneath the motor, is usually of the so-called thrust bearing type, to absorb the axial thrusts on the motor shaft. A known submerged motor is disclosed in US 4015633.

A drawback of submerged motors of the known type concerns the protection of the electric motor and of the electric connections from the liquid transferred by the pumping member. To such an end, the case of the submerged motors defines a room which is separated, through mechanical seal members, both from the liquid present inside the same case, and from the liquid which crosses the pumping member.

To such a problem is connected the necessity of inspecting the operating members arranged inside the external case. In fact such submerged motors can operate on liquids which, even if filtered, still drag sand particles and the like. In submerged motors of the known type, it is difficult to combine the exigency of a perfect protection of the electric motor with an easy assembling of the different parts. In particular, ensuring, in the assembly step, the perfect coaxiality of the motor shaft and of the components associated therewith, in order to warrant a correct functioning, is often problematic.

### Disclosure

The task of the present invention is that of solving the aforementioned problems, devising a submerged motor which warrants a reliable protection of the motor members from the surrounding liquid.

Within such task, it is a further scope of the present invention that of providing a submerged motor which allows an easy and fast assembly.

Another object of the present invention is that of providing a submerged motor having a simple conception, a securely reliable functioning and versatile use, as well as relatively economic cost.

The cited scopes are attained, according to the present invention, by the submerged oil-immersed motor according to claim 1.

According to the present invention, the submerged motor has closure means suitable to isolate, at the upper part, the room for housing the motor unit, peripherally engaging the internal surface of the external case, and axially provided with a thrust bearing rolling means suitable to be blocked on an upper portion of the motor shaft to absorb the axial thrusts acting on the same motor shaft.

A feature of the submerged motor according to the present invention is that said closure means defines an internal room wherein a first mechanical seal group and a second mechanical seal group, respectively lower and upper, are housed, keyed on said motor shaft.

A further feature of the submerged motor according to the present invention is that it provides means for connecting said motor member to a power supply, comprising a male connector constrained, with tight seal, to said closure means through elastic blocking means and suitable to be linked to an external female connector.

### Description of Drawings

Details of the invention shall be more apparent from the detailed description of a preferred embodiment of the submerged motor according to the invention, illustrated for indicative purposes in the attached drawings, wherein:

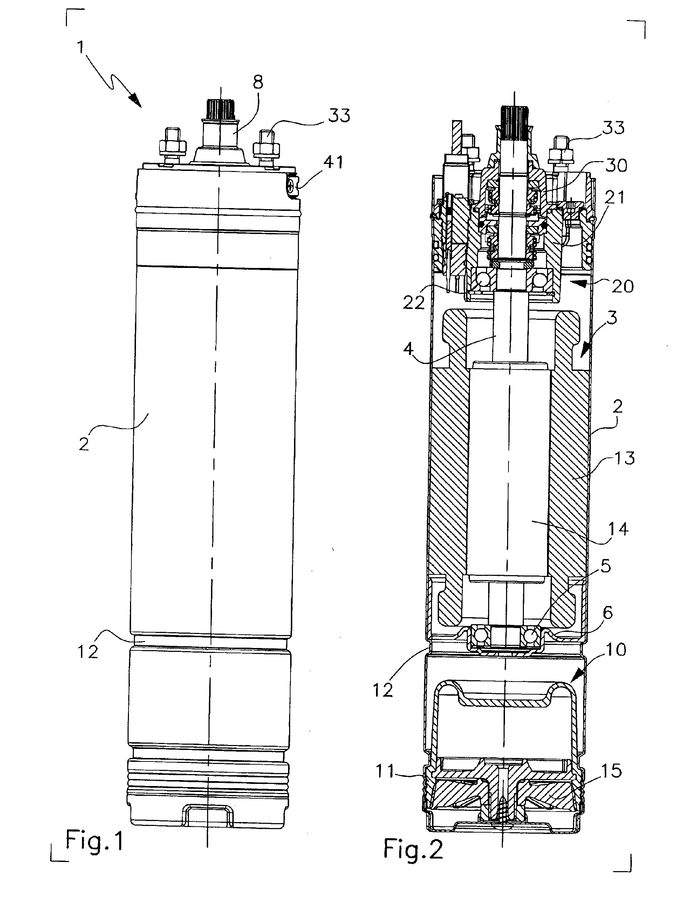

figure 1 shows a lateral view of the submerged motor;
figure 2 shows a view in axial section thereof;

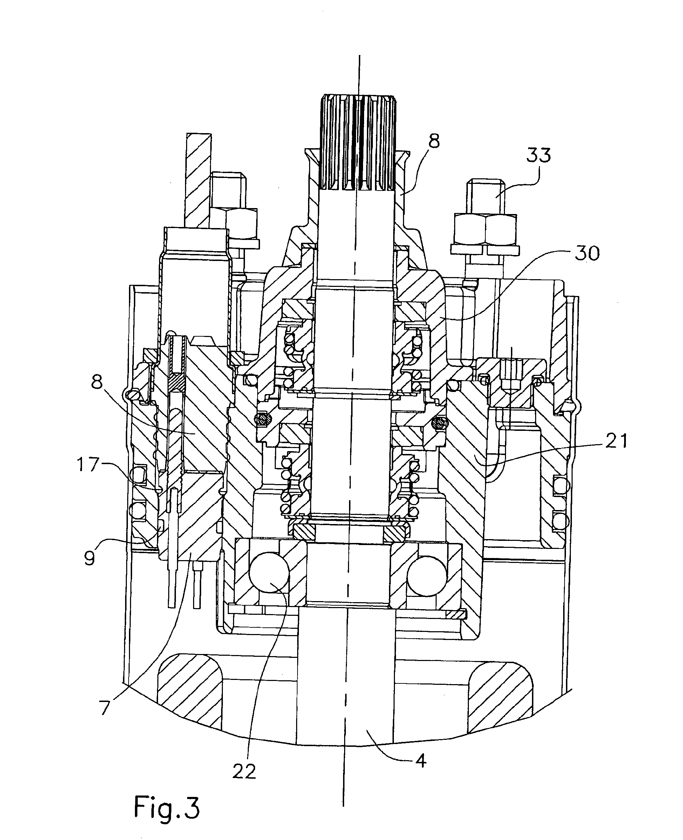

figure 3 shows a detail view of an upper portion of the submerged motor, according to the axial section of fig. 2;

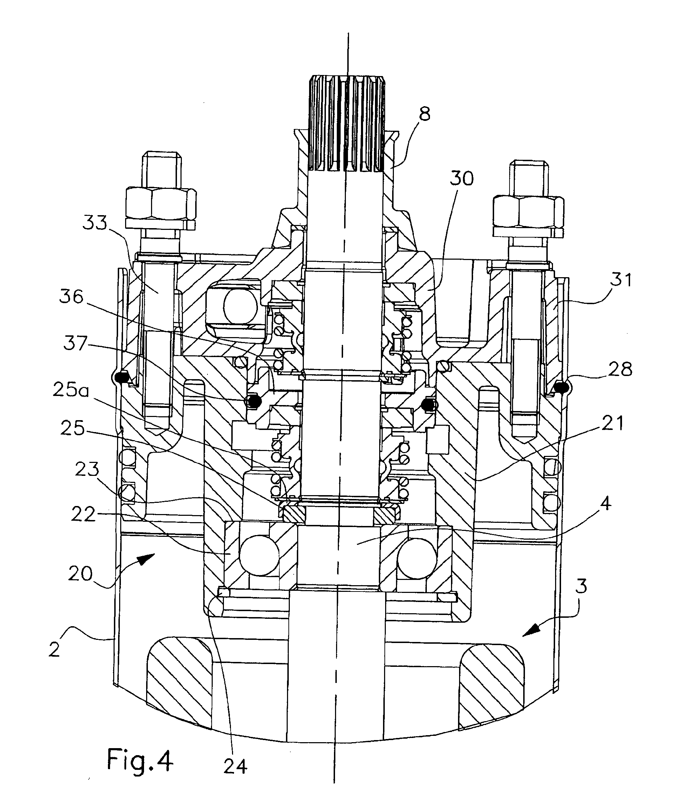

figures 4 and 5 respectively show a detail view of an upper portion of the submerged motor, according to various axial planes.

### Best Mode

With particular reference to such figures, the submerged motor, of the so-called oil-immersed type, is indicated in its entirety with 1. The submerged motor 1 is provided with a cylindrically shaped external case 2, inside which is mounted the electric motor member 3 which drives in rotation the motor shaft 4; the motor member 3 consists of a stator 13 and of a rotor 14 keyed on the motor shaft 4. The motor shaft 4 is carried rotatable at the lower part by a rolling bearing 5, for example a radial ball bearing, which is supported inside a seat defined by a lower lid 6; the lid 6 is substantially cup-shaped and is keyed inside the case 2, abutting on the side of an annular throat 12 shaped by the same case 2.

Underneath the lower lid 6, inside the case 2, is mounted a lower occlusion member 10 suitable to close at the base the room for housing the motor member 3 defined inside the case 2. The occlusion member 10 is preferably provided with a portion 11 of elastic material suitable to circumferentially engage the internal surface of the case 2 and a tightening member 15 suitable to perform the radial expansion of said portion 11 of elastic material against the internal surface of the case 2, as better illustrated in patent publication EP 2 300 717.

At the upper part, the motor shaft 4 extends for a portion of suitable length above the electric motor member 3. At such a portion, the motor shaft 4 crosses an upper occlusion member 20 suitable to close at the top the room for housing the motor member 3. The occlusion member 20 comprises a tubular body 21 for supporting the motor shaft 4 which defines in its internal side the housing seat for a rolling means 22, in particular consisting of a ball bearing of the so-called thrust bearing type. The external part of the thrust bearing rolling means 22 is blocked between an internal shoulder 23 of the tubular body 21 and a ring 24 inserted in a corresponding annular throat of the same tubular body 21. The internal part of the thrust bearing rolling means 22 is blocked between a shoulder of the motor shaft 4 and a ring 25 inserted in a corresponding annular throat of the same motor shaft 4; the ring 25 is preferably made of a couple of semi circular elements radially held by a lid 25a having a ring shape.

The tubular body 21 shapes an annular rim 26, having a substantially cylindrical shape, which is suitable to engage the internal surface of the case 2. On the annular rim 26 are practiced suitable annular throats for inserting a couple of elastomer rings 27 having the function of mechanical joint, of the type known as O-ring.

Above the support tubular body 21, the occlusion member 20 is provided with an upper lid 30 having an axial opening for the passage of the end portion of the motor shaft 4 and suitable to engage the internal surface of the case 2 with a peripheral portion 31. Between the peripheral portion 31 of the upper lid 30 and the annular rim 26 of the tubular body 21 is provided a blocking ring 28, suitable to engage a corresponding throat realized on the case 2.

It is to be observed that the lid 30 shapes at the lower part an annular room wherein a corresponding upper portion of the tubular body 21 is adapted to be engaged. An O-ring 29 is arranged between an annular projection 32 of the upper lid 30 and an annular seat defined by the tubular body 21.

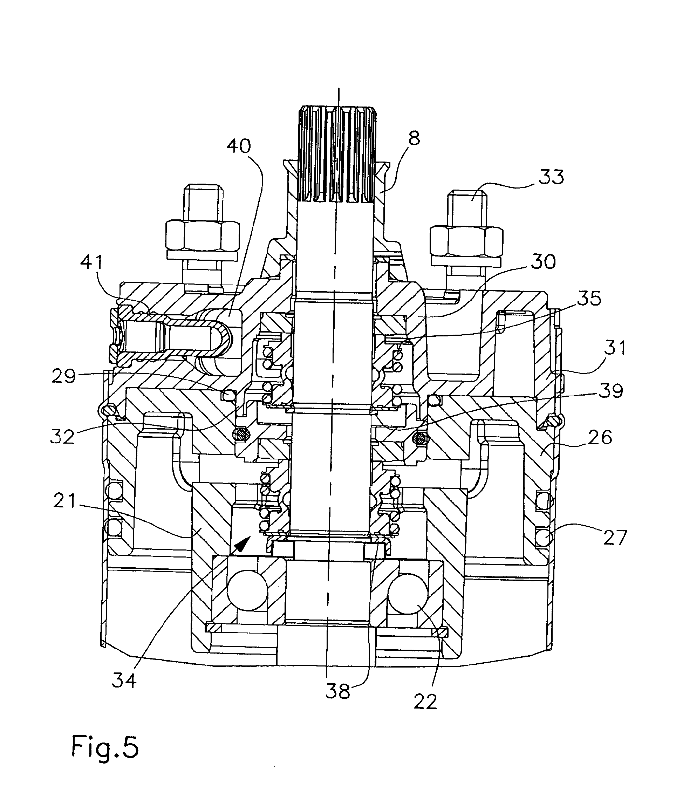

The upper lid 30 is tightened to the tubular body 21 of the occlusion member 20 through a series of tie-rod means 33 angularly distributed. The tie-rods 33 are passing through suitable holes practiced in the peripheral portion 31 of the upper lid 30 and are screwed, by a respective threaded portion, in corresponding threaded seats peripherally practiced on the tubular body 21 (see in particular fig. 5).

The upper lid 30 and the tubular body 21 of the occlusion member 20 further have suitable holes for the passage of the cables for connecting the motor member 3 to the power feed. In particular, the electric connection is made through a male connector 7 inserted at the motor side and a female connector 8, suitably resined, at the cable side. With the male connector 7 is associated an elastic blocking member 17 which also has the function of maintaining the closure preloading of the female connector 8. On the male connector 7 is mounted an O-ring 9 which cooperates with the elastic blocking member 17 to perform the tight sealing at the outlet of the lubricating fluid or at the inlet of liquid from the well.

Between the upper lid 30 and the tubular body 21 is defined an internal room wherein a first mechanical seal group 34 and a second mechanical seal group 35, respectively lower and upper, are housed, keyed on the motor shaft 4 in a way known per se. The mechanical seal groups 34, 35 are separated by a diaphragm 36, mounted with tight sealing, through an O-ring 37, inside the tubular body 21. The mechanical seal groups 34, 35 are held in support respectively on the blocking rings 38, 39 mounted on the motor shaft 4.

The upper chamber of the lubricating fluid is in communication with the external environment through a radial opening 40 practiced in the upper lid 30. The radial opening is closed, in use, by means of a bellows 41 made of material of the type of the gum suitable to warrant the equilibrium of the internal and external pressures in the upper chamber of the lubricating fluid.

Above the upper lid 30, on the motor shaft 4 is further mounted a sand guard member 8.

The functioning of the submerged motor turns out to be easy to understand from the description above.

After having mounted inside the case 2 the lower lid 6, brought abutting against the annular throat 12 shaped by the case 2, one provides to insert the stator 13 of the motor member 3. Then one provides to insert inside the case 2 the group formed by the motor shaft 4 carrying preassembled the rotor 14, the rolling bearing 5, the thrust bearing rolling means 22 blocked inside the tubular body 21 of the occlusion member 20 with the relative mechanical joint members.

Further are orderly positioned the first mechanical seal group 34, the diaphragm 36, the blocking rings 38, 39, the second mechanical seal group 35 and the upper lid 30, with the relative mechanical joint members. The upper lid 30 is tightened to the tubular body 21 through the tie-rod means 33. It is to be observed that the screwing of the tie-rods 33 determines an axial displacement of the tubular body 21 together with the group formed by the shaft 4 with the thrust bearing rolling means 22 and the mechanical seals 34, 35.

Furthermore, one provides to assemble the closure means 10 which isolates at the lower part the room for housing the motor unit 3 inside the case 2 from the fluid present outside the case 2. When the assembly is complete, the room for housing the motor unit results perfectly isolated from the liquid fed by the pumping unit and from the liquid present outside the case, thanks to the action of the closure means 10, 20.

The submerged motor object of the invention attains the scope of ensuring a reliable protection of the motor member from the surrounding liquid.

A characteristic of the submerged motor is that the axial thrust on the motor shaft 4 is absorbed by the thrust bearing means 22 associated with the tubular body 21 and blocked on an upper portion of the motor shaft 4. This allows to obtain a greater precision in assembling step and the control on the axial heights relative to the mechanical seals and to the protruding of the shaft 4.

Another advantage of the submerged motor is that the electric connection of the motor member 3 is realized through a male connector 7 linked to the upper occlusion member 20 without the use of fixing screws. This makes possible an easy and fast disassembly in order to inspect the upper part of the motor.

A further advantage of the submerged motor is provided by the presence of two mechanical seals 34, 35 and by the double compensation of the pressure which is realized through the portion 11 of elastic material of the lower occlusion member 10 and the elastic bellows 41 for closing the radial opening 40 practiced in the upper lid 30.

The apparatus described for indicative purpose is susceptible of numerous modifications and variants according to the diverse exigencies.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Submerged oil-immersed motor comprising a tubular shaped external case (2); an electric motor unit (3) inserted coaxial in said case (2); closure means (10, 20) suitable to isolate a housing room for said motor unit (3) inside said case (2) from the fluid present outside of the same case (2)
**characterized in that** said closure means (10, 20) comprises an upper occlusion member (20) suitable to engage peripherally the internal surface of said case (2) and axially provided with a tubular body (21) for supporting the motor shaft (4), carrying, in its internal side, thrust-bearing rolling means (22) suitable to be blocked at an upper portion of said motor shaft (4) to absorb the axial thrusts on the same motor shaft (4).

2. Motor according to claim 1, **characterized in that** above the tubular body (21) for supporting the motor shaft (4), said occlusion member (20) comprises an upper lid (30) having an axial opening for the passage of the end portion of the same motor shaft (4) and suitable to engage the internal surface of said case (2) with a peripheral portion (31).

3. Motor according to claim 2, **characterized in that** between said upper lid (30) and said tubular body (21) an internal room is defined, wherein a first mechanical seal group (34) and a second mechanical seal group (35), respectively lower and upper, are housed, keyed on said motor shaft (4).

4. Motor according to claim 3, **characterized in that** said mechanical seal groups (34, 35) are separated by a diaphragm (36), mounted with tight seal inside said tubular body (21).

5. Motor according to claim 2, **characterized in that** said upper lid (30) is in communication with the external environment through a radial opening (40) closed, in use, by means of a bellows (41) made of elastic material suitable to warrant the equilibrium of the internal and external pressures.

6. Motor according to claim 2, **characterized in that** said upper lid (30) is tightened to said tubular body (21) through a series of tie-rod means (33) passing through respective holes made in a peripheral portion (31) of said upper lid (30) and provided with a threaded portion in order to screw in corresponding threaded seats made peripherally to the tubular body (21).

7. Motor according to claim 1, **characterized in that** said upper occlusion member (20) is provided with connection means for connecting said motor unit (3) to a power feed, said connection means comprising a male connector (7) constrained with tight-sealing to the same occlusion member (20) by means of elastic blocking means (17) and suitable to be linked to an external female connector (8).

8. Motor according to claim 1, **characterized in that** said tubular body (21) shapes an annular rim (26), having a substantially cylindrical shape, suitable to engage the internal surface of said case (2).

## Patentansprüche

1. Unteröl-Tauchmotor, umfassend ein röhrenförmiges Außengehäuse (2), eine Elektromotoreinheit (3), die koaxial in das Gehäuse (2) eingesetzt ist und Schließmittel (10, 20), die dazu geeignet sind, einen Einhausungsraum für die Motoreinheit (3) im Inneren des Gehäuses (2) von dem Fluid zu isolieren, das außerhalb des Gehäuses (2) vorhanden ist,
**dadurch gekennzeichnet, dass** die Schließmittel (10, 20) ein oberes Verschlusselement (20) umfassen, das dazu geeignet ist, peripher mit der Innenfläche des Gehäuses (2) in Eingriff zu gelangen, und axial mit einem röhrenförmigen Körper (21) zum Stützen der Motorwelle (4) versehen ist und in seinem Inneren Axialwälzlagermittel (22) trägt, die dazu geeignet sind, an einem oberen Abschnitt der Motorwelle (4) arretiert zu sein, um die axialen Stöße auf die Motorwelle (4) zu absorbieren.

2. Motor nach Anspruch 1, **dadurch gekennzeichnet, dass** das Verschlusselement (20) oberhalb des röhrenförmigen Körpers (21) zum Stützen der Motorwelle (4) einen oberen Deckel (30) umfasst, der eine axiale Öffnung für den Durchlass des Endabschnittes der Motorwelle (4) aufweist und dazu geeignet ist, mittels eines peripheren Abschnitts (31) mit der Innenfläche des Gehäuses (2) in Eingriff zu gelangen.

3. Motor nach Anspruch 2, **dadurch gekennzeichnet, dass** zwischen dem oberen Deckel (30) und dem röhrenförmigen Körper (21) ein Innenraum definiert ist, in dem eine erste mechanische Dichtungsgruppe (34) und eine zweite mechanische Dichtungsgruppe (35), beziehungsweise eine untere und eine obere, untergebracht sind, die auf die Motorwelle (4) gespannt sind.

4. Motor nach Anspruch 3, **dadurch gekennzeichnet, dass** die mechanischen Dichtungsgruppen (34, 35) durch eine Membran (36) getrennt sind, die gut abdichtend in den röhrenförmigen Körper (21) montiert ist.

5. Motor nach Anspruch 2, **dadurch gekennzeichnet, dass** der obere Deckel (30) mit der Außenumgebung durch eine radiale Öffnung (40) in Verbindung steht, die während des Gebrauchs mittels eines Balges (41) verschlossen ist, der aus elastischem Material besteht und dazu geeignet ist, das Gleichgewicht zwischen Innen- und Außendruck zu gewährleisten.

6. Motor nach Anspruch 2, **dadurch gekennzeichnet, dass** der obere Deckel (30) durch eine Reihe von Zugankermitteln (33) an den röhrenförmigen Körper (21) festgezogen ist, die durch entsprechende Öffnungen in einem peripheren Abschnitt (31) des oberen Deckels (30) verlaufen und mit einem Gewindeabschnitt versehen sind, um in entsprechende mit Gewinde versehene Aufnahmen geschraubt zu werden, die peripher am röhrenförmigen Körper (21) vorhanden sind.

7. Motor nach Anspruch 1, **dadurch gekennzeichnet, dass** das obere Verschlusselement (20) mit Verbindungsmitteln zur Verbindung der Motoreinheit (3) mit einer Leistungszufuhr versehen sind, wobei die Verbindungsmittel einen Stecker (7) umfassen, der mittels elastischer Arretiermittel (17) gut abdichtend an das Verschlusselement (20) gepresst und dazu geeignet ist, mit einer externen Buchse (8) verbunden zu werden.

8. Motor nach Anspruch 1, **dadurch gekennzeichnet, dass** der röhrenförmige Körper (21) einen Kranz (26) mit einer im Wesentlichen zylindrischen Form bildet, der dazu geeignet ist, mit der Innenfläche des Gehäuses (2) in Eingriff zu gelangen.

## Revendications

1. Moteur immergé à bain d'huile comprenant un boîtier externe de forme tubulaire (2) ; une unité de moteur électrique (3) insérée de manière coaxiale dans ledit boîtier (2) ; des moyens de fermeture (10, 20) adaptés pour isoler un espace de logement pour ladite unité de moteur (3) à l'intérieur dudit boîtier (2) par rapport au fluide présent à l'extérieur de ce même boîtier (2)
**caractérisé en ce que** lesdits moyens de fermeture (10, 20) comprennent un élément d'occlusion supérieur (20) adapté pour engager de manière périphérique la surface interne dudit boîtier (2) et muni axialement d'un corps tubulaire (21) pour supporter l'arbre moteur (4), supportant, dans son côté interne, des moyens de roulement de palier de butée (22) adaptés pour être bloqués au niveau d'une portion supérieure dudit arbre moteur (4) pour absorber les poussées axiales sur ce même arbre moteur (4).

2. Moteur selon la revendication 1, **caractérisé en ce que**, au-dessus du corps tubulaire (21) pour supporter l'arbre moteur (4), ledit élément d'occlusion (20) comprend un couvercle supérieur (30) ayant une ouverture axiale pour le passage de la portion d'extrémité de ce même arbre moteur (4) et adapté pour engager la surface interne dudit boîtier (2) avec une portion périphérique (31).

3. Moteur selon la revendication 2, **caractérisé en ce qu'**un espace interne est défini entre ledit couvercle supérieur (30) et ledit corps tubulaire (21), dans lequel un premier groupe d'étanchéité mécanique (34) et un deuxième groupe d'étanchéité mécanique (35), respectivement inférieur et supérieur, sont logés, clavetés sur ledit arbre moteur (4).

4. Moteur selon la revendication 3, **caractérisé en ce que** lesdits groupes d'étanchéité mécaniques (34, 35) sont séparés par une membrane (36), montée avec joint étanche à l'intérieur dudit corps tubulaire (21).

5. Moteur selon la revendication 2, **caractérisé en ce que** ledit couvercle supérieur (30) est en communication avec l'environnement externe à travers une ouverture radiale (40) fermée, en service, au moyen d'un soufflet (41) réalisé en matériau élastique adapté pour garantir l'équilibre des pressions interne et externe.

6. Moteur selon la revendication 2, **caractérisé en ce que** ledit couvercle supérieur (30) est serré sur ledit corps tubulaire (21) par le biais d'une série de moyens formant tirant (33) passant à travers des trous respectifs réalisés dans une portion périphérique (31) dudit couvercle supérieur (30) et munis d'une portion filetée de manière à se visser dans des sièges filetés correspondants réalisés de manière périphérique au corps tubulaire (21).

7. Moteur selon la revendication 1, **caractérisé en ce que** ledit élément d'occlusion supérieur (20) est doté de moyens de connexion pour connecter ladite unité de moteur (3) à une alimentation électrique, lesdits moyens de connexion comprenant un connecteur mâle (7) fixé de manière étanche à ce même élément d'occlusion (20) au moyen de moyens de blocage élastiques (17) et adapté pour être relié à un connecteur femelle externe (8).

8. Moteur selon la revendication 1, **caractérisé en ce que** ledit corps tubulaire (21) forme un bord annulaire (26), ayant un profil sensiblement cylindrique, adapté pour engager la surface interne dudit boîtier (2).
